# EUROPEAN PATENT SPECIFICATION

(11) **EP 4 006 060 B1**
(45) Date of publication and mention of the grant of the patent: **31.12.2025**
(21) Application number: 20209881.0
(22) Date of filing: 25.11.2020
(51) Int. Cl.: C08F 2/00, C08F 2/01, B01J 8/24, B01J 19/24, C08F 10/06

(54) **PROPYLENE POLYMERIZATION PLANT AND PROPYLENE POLYMERIZATION PROCESS**
PROPYLENPOLYMERISATIONSANLAGE UND VERFAHREN ZUR POLYMERISATION VON PROPYLEN
INSTALLATION ET PROCÉDÉ DE POLYMÉRISATION DE PROPYLÈNE

(43) Date of publication of application: 01.06.2022
(73) Proprietor: Borealis GmbH, 1020 Vienna (AT)
(72) Inventor: BERGSTRA, Michiel, 3583 Beringen (BE); NYFORS, Klaus, 06101 Porvoo (FI); MOLIN, Claus, 1020 Vienna (AT); KOKKO, Esa, 06101 Porvoo (FI)
(74) Representative: Maiwald GmbH

(56) References cited:
- EP-A1- 3 438 133
- WO-A1-2019/089111
- WO-A1-2019/090883
- CN-U- 207 685 181

## Description

### Field of the Invention

The present invention concerns a polymerization plant suitable for extra large-scale propylene polymerization. The present invention further concerns a process for polymerization of propylene using such plant.

### Background

Coupling of loop and gas phase reactor is known for more than two decades under the trademark Borstar^{®} and has found its way into practically any textbook in the field of polyolefins. The basic process layout is for example described in WO9858975A1 dealing with the preparation of propylene homopolymers and copolymers, which comprises polymerizing propylene optionally with comonomers in the presence of a catalyst at elevated temperature and pressure in at least one slurry reactor and at least one gas phase reactor, the polymerization product of at least one slurry reactor, containing unreacted monomers, being directly conducted to a first gas phase reactor essentially without recycling of the unreacted monomers to the slurry reactor.

One important aspect of loop - gas-phase reactor configurations is once-through conversion. For example, early WO9925741 describes a method of introducing polymer slurry obtained from a slurry reactor into a gas phase reactor containing a fluidized bed (C, D) with a first fluidized zone (C) on top of a second fluidized zone (D) with said fluidized zones having different flow patterns, in order to optimize the once-through conversion of the process.

Unfortunately medium size polypropylene production plants have significant higher operational costs and fixed costs per ton of produced product when compared to extra-large size polypropylene plants. However, by increasing the scale of the production, quality issues and operational issues can do rise. Increasing capacity of loop reactors can be done by adding further legs to the reactor. In industry, loop reactors have been scaled up from two legs to six legs, and even 8 legs loop reactors are not uncommon. However, the single circulation time using an 8-leg loop reactor will be roughly doubled when compared to a 4-legs loop reactor. Unfortunately, such modifications may result in drawbacks, e.g., significant concentration gradients can occur. For example, in polypropylene homo-polymerization the hydrogen to propylene ratio can vary over the length of the loop reactor, and especially in random propylene ethylene co-polymerization the ratio of ethylene to propylene can cause a significant gradient in the loop reactor. It goes without saying, when the C2/C3 ratio drops over the length of the HLZ:SC

loop reactor, the randomness will be affected. Thus, when producing for example random propylene ethylene copolymer workarounds such as local fed of ethylene or multiple feed points to the reactor become a must. To sum up, upscaling of loop reactors is extremely cumbersome.

Another challenge for polymerization processes at very high throughput and especially for very large scale gas phase reactors is to control the temperature in a wide operating range, e.g. also at turndown ratios of 50%, and to establish a broad operation window, e.g. broad temperature ranges. Turndown ratio characterizes the ability to run a plant at reduced throughput. Turndown ratio is usually defined as [1 - (minimum capacity / design capacity)]. In case of turndown, the cooling water return (CWR) flow temperature can increase to high temperatures outside the normal operating window of cooling water systems. Reduced efficiency and corrosion cracking problems in the context of stainless steel equipment can be expected. Avoiding unnecessary high temperatures in the cooling water return flow is particularly important as chlorine is added to cool water circuits and/or towers for preventing biological growth.

Thus, there remains still the need for a process and a plant allowing upscaling to extra-large scale avoiding at least in part these and related problems.

### Summary of the Invention

The present invention provides a plant for preparing propylene homopolymers or propylene copolymers, comprising
(i) feed tank(s) for catalyst (1), optional co-catalyst (2), optional activator and/or optional external donor (3);
(ii) optional a pre-contacting unit (4) for catalyst mixing being connected by feed lines (5, 5', 5") with the feed tank(s);
(iii) a prepolymerization reactor (6) connected with the feed tank(s) (1, 2, 3) or the pre-contacting unit (4) ;
(iv) a propylene feed tank (7);
(v) a first loop reactor (8) connected with the prepolymerization reactor;
(vi) a second loop reactor (9) connected with the first loop reactor via a loop reactors connecting line (10);
(vii) means for feeding monomer and optional comonomer (11) and hydrogen (12) to one or more of first loop reactor (8), second loop reactor (9), and/or loop reactors connecting line (10) between the loop reactors;
(viii) a gas-phase reactor (13) equipped with a gas circulation line (14), a circulation gas compressor (15) and a circulation gas cooler (16), the gas-phase reactor being coupled to the at least second loop reactor by a direct feed line (17);
(ix) means for feeding monomer (44) and/or comonomer (18) and/or hydrogen (19) to the gas-phase reactor (13); whereby preferably the means for feeding monomer and/or comonomer are suitable for feeding monomer and/or comonomer in condensed form;
(x) optionally a product discharge vessel (20) connected with the gas-phase reactor;
(xi) optionally a product outlet heater (21)
(xii) a product receiver tank (22) connected with the optional product discharge vessel (20) or with the gas-phase reactor (13);
(xiii) at least one purge bin (23);
(xiv) at least one propylene nitrogen recovery unit (24);
(xv) a column supply line (241) for feeding a hydrocarbon stream to a column (28)
(xvi) a nitrogen re-feed line (243) for re-feeding a nitrogen rich stream to the purge bin (23)
(xvii) optionally a thermal oxidizer unit (43)
(xviii) an exhaust line (242) for discharge of an exhaust stream optionally to the optional thermal oxidizer (43)
(xix) means for propylene homopolymer or propylene copolymer recovery (25) optionally including means for homogenization, additivation, and pelletization;
(xx) a recovery gas treating unit (26) comprising at least one compressor (27), said column (28) and a reflux feed vessel (28a), the reflux feed vessel (28a) being connected via a recovery line (29) with the gas circulation line (14) of the gas-phase reactor (13)
(xxi) a cooling circuit (30) for the circulation gas cooler (16);
(xxii) a blow down unit (31) comprising a high pressure blow down bin (32), a low pressure blow down bin (33), the blow down unit (31) being optionally connected via connecting line (34) with the product receiver tank (22);
(xxiii) a recovery feed line (35) connecting recovery gas treating unit (26) with the propylene feed tank (7), and
wherein the circulation gas cooler (16) is a heat exchanger with a closed loop cooling water system (300) comprising a cooling water pump (301), a secondary heat exchanger (302), expansion vessel (303) and a by-pass (304) over a secondary heat exchanger.

The present invention further provides
a process for preparing propylene homopolymers and copolymers, comprising
a) providing catalyst, optional co-catalyst, optional activator and/or optional external donor in feed tanks (1, 2, 3);
b) feeding said catalyst, said optional co-catalyst, said optional activator and/or said optional external donor to a pre-contacting unit (4) for providing a mixed catalyst system; feeding said mixed catalyst system to the prepolymerization reactor (6)
   or
   feeding said catalyst, said optional co-catalyst, said optional activator and/or said optional external donor directly to a prepolymerization reactor (6);
c) initiating prepolymerization by introducing propylene monomer and optionally introducing comonomer thereby providing a prepolymer;
d) feeding said prepolymer to a first loop reactor (8) and polymerizing propylene optionally with comonomer yielding a first intermediate;
e) feeding the first intermediate to a second loop reactor (9) via a loop reactors connection line (10) and further polymerizing propylene optionally with comonomer yielding a second intermediate, whereby propylene is fed from propylene feed tank (7) via propylene re-feed line (41) to the first loop reactor (8) and the second loop reactor (9);
f) introducing optional comonomer and/or hydrogen at further feed points (11, 12) to the loop reactors;
g) feeding the second intermediate containing unreacted monomer(s) directly to gas phase reactor (13) via direct feed line (17);
h) further polymerizing propylene and optional comonomer in said gas phase reactor (13) by feeding propylene monomer and/or comonomer and/or hydrogen by effecting a gas circulation via a gas circulation line (14) in upwards direction through the gas phase reactor (13), whereby the circulating gas is cooled in a circulation gas cooler (16);
i) discharging the gas-phase reactor product into
   an optional product discharge vessel (20) and subsequently into a product-receiver tank (22) via an optional product outlet heater (21) for providing a raw mixture or discharging the gas-phase reactor product directly into a product receiver tank (22) for providing a raw mixture;
j) feeding said raw mixture to purge bin (23);
k) purging said raw mixture by nitrogen and catalyst deactivation agent, the catalyst deactivation agent being preferably steam,
l) separating nitrogen, deactivation agent and hydrocarbons from the purge bin (23) in a propylene nitrogen recovery unit (24) thereby
   - providing an essentially pure nitrogen steam being fed via nitrogen re-feed line (243) to purge bin (23) ;
   - providing a hydrocarbon lean waste stream being fed via exhaust line (242) to an optional thermal oxidizer unit (43);
   - providing a dry hydrocarbon rich stream being fed via column supply line (241) to column (28), whereby said column (28) is operated at a pressure higher than the pressure of the gas phase reactor (13) for removing oligomers, waxes and oils;
m) redirecting condensed propylene and propane to one or more of the following
   - said propylene feed tank (7) via recovery feed line (35);
   - an optional propane / propylene splitter,

   and feeding the non-condensed matter at least in part to the gas-phase reactor via line 29, and
   wherein the circulation gas cooler (16) is a heat exchanger and the heat is transferred via a closed loop cooling water system (300) comprising a cooling water pump (301), a secondary heat exchanger (302), expansion vessel (303) and a by-pass (304) over the secondary heat exchanger.

The plant according to the present invention, in contrast to conventional Borstar plants, contains a recovery feed line (29) allowing to redirect non-condensed propylene back to the gas phase reactor (13). This setup surprisingly turned out to be beneficial with respect to the overall conversion and even further with respect to the monomer factor. For example, when producing random polypropylene copolymer huge savings are observed.

In the process according to the present invention, column (28) is operated at a pressure higher than the pressure of the gas phase reactor 13). This enables to recycle part of the hydrocarbons via recovery lines (29, 29') back to the gas phase reactor. It surprisingly turned out, that high hydrogen concentrations in the presence of ethylene are possible and the process is characterized by a high once-through conversion. As another surprising aspect, high amount of hydrogen recovery was observed. This is particularly beneficial for high melt flow rate grades: the required fresh hydrogen for the gas phase reactor can be lowered.

In a further aspect, nitrogen, steam and propylene as obtained are separated into
- a dry hydrocarbon rich stream (N2 lean < 0.5 mol%) which is fed back to column (28),
- a pure nitrogen (>99mol%) stream which is fed back to purge bin (23) via nitrogen re-feed line (243); and
- a water waste flow and hydrocarbon lean nitrogen flow, which is fed to thermal oxidizer unit (43).

The plant according to the present invention is configured such that the circulation gas cooler (16) is a heat exchanger within a closed loop cooling water system (300) comprising a cooling water pump (301), a secondary heat exchanger (302), expansion vessel (303) and a by-pass (304) over a secondary heat exchanger. In the inventive plant and process, the gas circulation flow is cooled by a heat exchanger in order to have a very efficient temperature control in the gas phase reactor, usually and preferably a fluidized bed reactor. The polymerization heat is transferred to a closed loop cooling water system (300), comprising a cooling water pump (301), a secondary heat exchanger (302), expansion vessel (303) and a by-pass over the secondary heat exchanger (304). The polymerization heat is further transferred via the closed loop cooling water system heat exchanger to a common site cooling water system, which can be for example cooling water towers. The main advantage is that the cooling water flow through the primary heat exchanger can be kept constant at a temperature above the dew point of the circulation gas and offering a wide operating window on production rates in the gas phase reactor. Turndown ratios of 50% or more become possible. Turndown ratio characterizes the ability to run a plant at reduced throughput. Turndown ratio is defined as [1 - (minimum capacity / design capacity)].

In case of using a direct cooling water system cool water return temperature would rise to high values above typical designed operating temperature of the common site cooling water system, i.e. the operating window had to be limited.

The plant according to the present invention preferably comprises one or more of the following:
(i) knock out drum (38)
(ii) gas phase reactor area depressurization cyclone (39)
(iii) gas phase reactor flare knock out drum (40).

Such units increase the safety of the inventive plant.

In the process according to the present invention, the circulation gas cooler (16) is a heat exchanger and the heat is transferred to a closed loop cooling water system, comprising a cooling water pump, a secondary heat exchanger, expansion vessel and a by-pass over the secondary heat exchanger. More preferably, the polymerization heat is transferred via the closed loop cooling water system to a common site cooling water system, such as a cooling water tower, for enabling a constant cooling water flow through the heat exchanger within the gas circulation at a temperature above the dew point of the circulation gas.

In a further aspect, the process according to the present invention is characterized by possible turn down ratios of more than 50%. This high turn down allows really high flexibility with respect to varying products and demands.

The split, i.e. the ratio of the amounts of material produced in loop and gas phase reactors respectively ranges from 40-60 to 60-40.

In yet a further aspect, the polymerization temperature in the first and/or the second loop reactor, preferably in both loop reactors is below 72°C, more preferably below 70°C.

According to a further aspect of the process as described herein, the polymerization temperature in the gas phase reactor is preferably between 80°C and 90°C and the pressure is preferably between 19 and 25 barg, more preferably between 20 and 24 barg.

In yet a further preferred of the process as described herein, the operating pressure of the column preferably is 26 barg, more preferably is 25 barg most preferably is 24 barg.

### Detailed Description

In the following, the invention shall be described with respect to the figures.

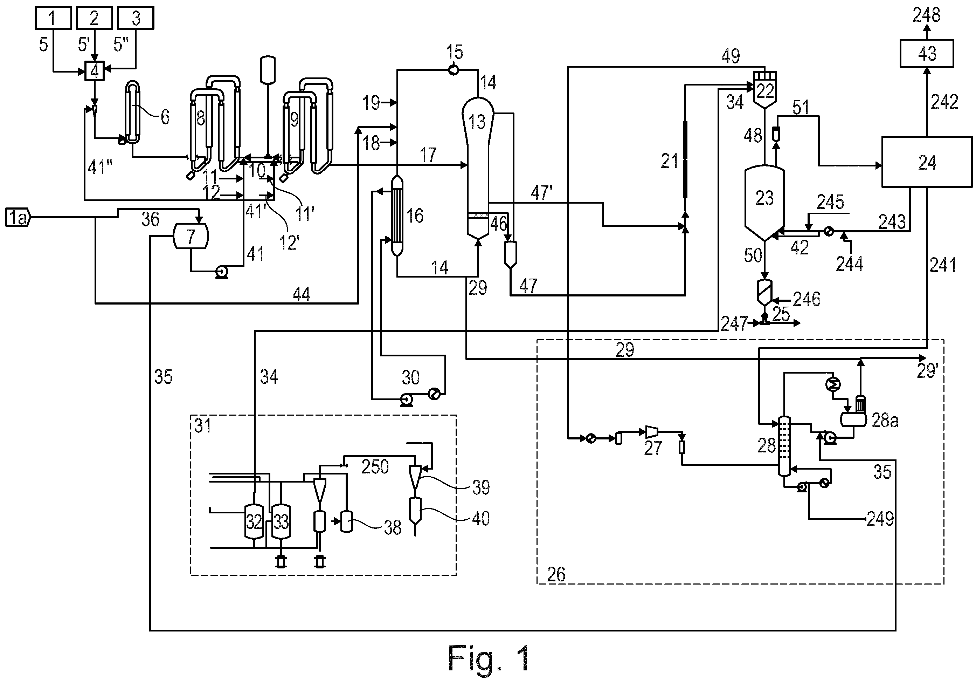

### Reference numbering for Fig. 1

- 1: feed tank for catalyst
- 2: optional feed tank for co-catalyst
- 3: optional feed tank(s) for activator and/or optional external donor
- 4: optional pre-contacting unit for catalyst mixing
- 5, 5', 5": feed lines connecting feed tank connecting feed tanks and catalyst feed vessel or prepolymerization reactor
- 6: prepolymerization reactor
- 7: propylene feed tank
- 8: first loop reactor
- 9: second loop reactor
- 10: loop reactors connecting line
- 11: means for feeding monomer and optional comonomer
- 12: means for feeding hydrogen
- 13: gas-phase reactor
- 14: gas circulation line
- 15: circulation gas compressor
- 16: circulation gas cooler
- 17: direct feed line
- 18: means for feeding comonomer
- 19: means for feeding hydrogen
- 20: optional product discharge vessel
- 21: product outlet heater
- 22: product receiver tank
- 23: purge bin
- 24: propylene nitrogen recovery unit
- 25: outlet line (for polymer powder) with means for propylene homopolymer or propylene copolymer recovery (optionally including means for homogenization, additivation and pelletization;
- 26: recovery gas treating unit
- 27: gas recovery compressor
- 28: column
- 28a: reflux recovery feed vessel
- 29, 29': recovery feed lines
- 30: cooling circuit for circulation gas cooler
- 31: blow down unit
- 32: high pressure blow down bin
- 33: low pressure blow down bin
- 34: connecting line
- 35: recovery feed line
- 36: further feed line optionally containing dryer(s)
- 38: knock out drum
- 39: gas phase reactor area depressurization cyclone
- 40: gas phase reactor flare knock out drum
- 41, 41', 41": propylene feed line
- 42: means for catalyst deactivation (e.g. means for introducing low pressure steam)
- 43: thermal oxidizer unit
- 44: means for feeding liquid propylene monomer
- 48: purge bin feed line
- 49: line connecting product receiver tank (22) and gas recovery compressor (27)
- 51: feed line from purge bin (23) to propylene nitrogen recovery unit (24)
- 241: column supply line
- 242: exhaust line
- 243: nitrogen re-feed line
- 244: external nitrogen feed line
- 245: feed line for catalyst deactivating agent (usually low pressure steam)
- 246: further nitrogen feed line
- 247: line for conveying nitrogen
- 249: outlet line for oligomers

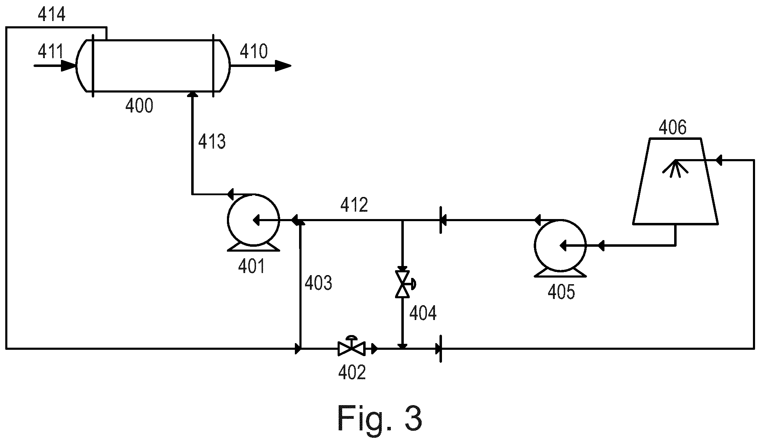

Fig. 1 shows the inventive plant which is used for carrying out the inventive process.
Fig. 2 shows the inventive cooling setup.
   Reference numbering for Fig. 2
   - 300: gas phase reactor circulation gas cooler
   - 301: cooling water pump of closed loop cooling water system
   - 302: a secondary heat exchanger
   - 303: expansion vessel of closed loop cooling water system
   - 304: by-pass over the secondary heat exchanger
   - 305: site cooling water pump(s)
   - 306: site cooling water tower(s)
   - 310: gas circulation flow to the gas phase reactor
   - 311: gas circulation flow after compression stage from the gas phase reactor
   - 312: closed loop cooled cooling water flow
   - 313: total closed loop cooling water flow in to gas phase reactor circulation cooler
   - 314: closed loop cooling water flow out from gas phase reactor circulation cooler
   - 315: site cooling water supply flow
   - 316: site cooling water return flow
Fig. 3 shows a comparative cooling water setup.
   Reference numbering for Fig. 3
   - 400: gas phase reactor circulation gas cooler
   - 401: cooling water pump of gas phase reactor cooling system
   - 402: cooling water return control line
   - 403: cooling water by-pass
   - 404: cooling water supply control line
   - 405: site cooling water pump(s)
   - 406: site cooling water tower(s)
   - 410: gas circulation flow to the gas phase reactor
   - 411: gas circulation flow after compression stage from the gas phase reactor
   - 412: fresh cool water supply flow
   - 413: total cooling water flow to gas phase reactor circulation gas cooler

The plant according to the present invention shall be further described with respect to Fig. 1.

The plant according to the present invention for preparing propylene homopolymers and copolymers comprises feed tank(s) for catalyst (1), optional co-catalyst (2), optional activator and/or optional external donor (3). Optionally there is a pre-contacting unit (4) for catalyst mixing being connected by feed lines (5, 5', 5") with the feed tank(s). In various embodiments and for various catalyst systems, a pre-contacting tank is not necessary.

The plant according to the present invention also includes a prepolymerization reactor (6) connected with the feed tank(s) (1, 2, 3) or the pre-contacting unit (4). Such prepolymerization is known in the art. The plant also includes a propylene feed tank (7), a first loop reactor (8) connected with the prepolymerization reactor, and a second loop reactor (9) connected with the first loop reactor via a loop reactors connecting line (10) as well as means for feeding comonomer (11) and hydrogen (12) to one or more of first loop reactor (8), second loop reactor (9), and/or loop reactors connecting line (10) between the loop reactors.

Such setup is frequently found in existing plants.

Apart from the loop reactors the plant according to the present invention also comprises a gas-phase reactor (13) equipped with a gas circulation line (14), a circulation gas compressor (15) and a circulation gas cooler (16), the gas-phase reactor being coupled to the at least second loop reactor by a direct feed line (17). means for feeding monomer (44) and/or comonomer (18) and/or hydrogen (19) to the gas-phase reactor (13). In addition to the plant optionally includes a product discharge vessel (20) connected with the gas-phase reactor. Such product discharge vessel contributes to the operational stability. Optionally a product outlet heater (21) is present. Usually, a product outlet heater will be several units. The plant according to the present invention also includes a product receiver tank (22) connected with the optional product discharge vessel (20) or with the gas-phase reactor (13), at least one purge bin (23). In addition to that, the plant also includes at least one propylene nitrogen recovery unit (24) with a column supply line (241) for feeding a hydrocarbon stream to a column (28), a nitrogen re-feed line (243) for re-feeding a nitrogen rich stream to the purge bin (23), optionally a thermal oxidizer unit (43) and an exhaust line (242) for discharge of an exhaust stream optionally to the optional thermal oxidizer (43). Optionally there can be further feed lines such as a nitrogen re-feed line (243), an external nitrogen feed line (245), a feed line for catalyst deactivating agents, i.e. usually low-pressure steam. Preferably, there is also an outlet for oligomers (249).

The plant according to the present invention also includes means for propylene homopolymer or propylene copolymer recovery (25) said means (25) optionally including means for homogenization, additivation, and pelletization,
a recovery gas treating unit (26) comprising at least one compressor (27), said column (28) and a reflux feed vessel (28a), the reflux feed vessel (28a) being connected via a recovery line (29) with the gas circulation line (14) of the gas-phase reactor (13).

In addition to that, there is a cooling circuit (30) for the circulation gas cooler (16). Such circulation gas cooler contributes to the broad operational window.

Apart therefrom there is also a blow down unit (31) comprising a high pressure blow down bin (32), a low pressure blow down bin (33), the blow down unit (31) being optionally connected via connecting line (34) with the product receiver tank (22).

The plant according to the present invention further includes a recovery feed line (35) connecting recovery gas treating unit (26) with the propylene feed tank (7). This important recovery feed line (35) allows refeed of propylene also to the loop reactors, i.e. results in an integrated recovery system.

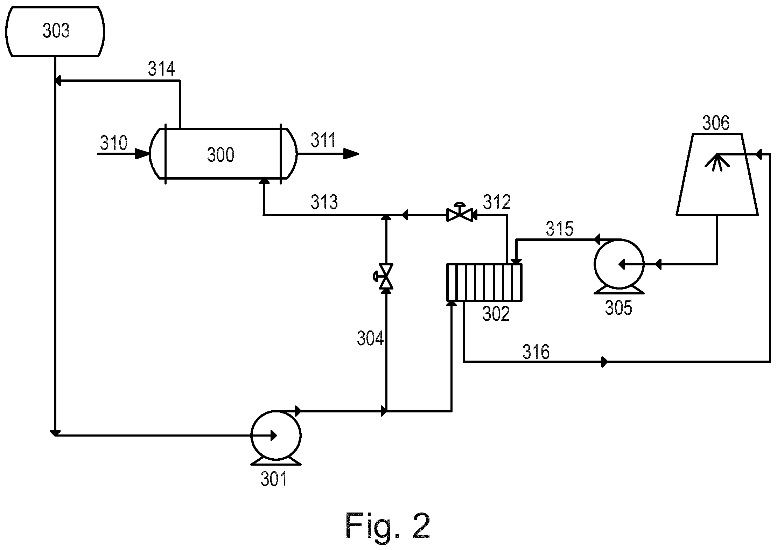

The cooling setup according to the present invention shall be described with reference to Fig. 2. The cooling medium, usually water, is circulated by a cooling water pump (301) in the closed loop cooling water system. The water enters a secondary heat exchanger (302) in which the heat is transferred to the site cooling water circuit. The site cooling water circuit includes site cooling water tower(s) (306), site cooling water pump(s) (305) but may also include heat consumers, i.e. re-use of the heat for residential heating or similar. The secondary heat exchanger can be of any type such as plate, shell and tube.

For properly adjusting temperature and keeping the flow through the primary heat exchanger (300) constant, there is also a by-pass (304) over the secondary heat exchanger in the closed loop cooling water system. In this closed loop cooling water system, heat is transferred from gas to water in the gas phase reactor circulation gas cooler (300). As known in the art there is also an expansion vessel of the closed loop cooling water system (303).

A direct heat exchanger on site cooling water system with recirculation pump is shown in Figure 3. Such configuration has been used for comparative purposes and is not desirable. It can be seen the site cooling water circuit is coupled directly with the gas phase reactor circulation gas cooler (400).

### Experimental Part

The plant and the process according to the invention have been exemplified in the following examples. These examples are included for illustrative purposes and do not limit the invention.

### Examples 1 and 2

In REF1 and REF2, no gas circulation cooler was used and there was only one loop reactor. In example IE1 a gas phase reactor and a gas circulation cooler was used. In example IE2, the recirculation was lowered.

**Table 1**

| | | REF1 | REF2 | IE1 | IE2 |
|---|---|---|---|---|---|
| Preparation of | | random polypropylene ethylene copolymer | | | |
| | | | | inventive plant/inventive process | |
| | | | | | product discharge vessel |
| Prepolymerization reactor | | | | | |
| production | kg/h | 0.9 | 0.9 | 0.9 | 0.9 |
| | Bar | 56 | 56 | 39 | 39 |
| T | °C | 20 | 20 | 20 | 20 |
| (first) Loop reactor | | | | | |
| production | kg/h | 45 | 90 | 60 | 60 |
| P | Bar | 55 | 55 | 38 | 38 |
| T | °C | 85 | 85 | 70 | 70 |
| Second loop reactor | | | | | |
| production | ton/h | | | 30 | 30 |
| P | Bar | | | 37 | 37 |
| T | °C | | | 70 | 70 |
| GPR1 | | | | | |
| production | kg/h | 30 | 90 | 90 | 90 |
| P | Bar | 35 | 21 | 21 | 21 |
| T | °C | 85 | 85 | 85 | 85 |
| Recirculati on | kg/h | 15 | 45 | 45 | 21 |
| once-through conversion | | 83% | 80% | 80% | 90% |

It can be seen that the inventive plant and the inventive process simultaneously allowed high production in the gas phase reactor and high once-through conversion.

### Example 3

In a second experimental evaluation, the catalyst mileage (IE1 versus REF2) was assessed.

**Table 2**

| | Catalyst feed | Loop Reactor | | Gas Phase Reactor | | catalyst |
|---|---|---|---|---|---|---|
| | normalised | residence time | production normalised | residence time | production normalised | productivity |
| | [%] | [h] | [%] | [h] | [%] | [-] |
| IE1 two loops + GPR | 100 | 0.8 | 100 | 2 | 100 | 2 |
| REF2 one loop + GPR | 100 | 0.5 | 80 | 2 | 80 | 1.6 |

Surprisingly a high catalyst mileage was obtained for the inventive process:

### Example 4

In yet a further experimental evaluation using the inventive plant and the inventive process, the cooling water temperatures were monitored when producing random ethylene propylene copolymer. The inventive used a closed loop cooling water system as shown in Fig. 2, whereas the comparative examples used a configuration as shown in Fig. 3.

The results are shown in Table 3 provided below.

| Inventive examples | | | normal | 40/60 | 50/50 | 60/40 | turn down | 45/55 | 50/50 | 60/40 | 40/60 | 50/50 | 40/60 | 60/40 | 50/50 | 40/60 | 60/40 |
|---|---|---|---|---|---|---|---|---|---|---|---|---|---|---|---|---|---|
| Ref# | | | random | random | random | random | random | random | random | random | random | homo | homo | homo | homo | homo | homo |
| production in the GPR | | kg/h | 99 | 108 | 90 | 72 | 45 | 99 | 90 | 72 | 108 | 90 | 108 | 72 | 90 | 108 | 72 |
| Temperature in GPR | | °C | 80 | 80 | 80 | 80 | 80 | 90 | 90 | 90 | 90 | 80 | 80 | 80 | 90 | 90 | 90 |
| T CRG in | 310 | °C | 82.8 | 82.8 | 82.8 | 82.8 | 84.0 | 92.6 | 92.6 | 92.6 | 92.6 | 82.8 | 82.8 | 82.8 | 92.6 | 92.6 | 92.6 |
| T CRG out | 311 | °C | 54.6 | 52.4 | 57.2 | 62.5 | 70.6 | 64.1 | 66.9 | 72.3 | 64.5 | 57.8 | 52.7 | 63.0 | 67.5 | 62.2 | 72.8 |
| by pass flow | 304 | m3/ h | 2.7 | 0.0 | 3.9 | 4.8 | 5.4 | 4.2 | 4.6 | 5.1 | 3.9 | 4.0 | 0.6 | 4.9 | 4.7 | 3.8 | 5.2 |
| Flow of T controlled stream | 312 | m3/ h | 3.3 | 6.0 | 2.1 | 1.2 | 0.6 | 1.8 | 1.4 | 0.9 | 2.2 | 2.0 | 5.4 | 1.1 | 1.3 | 2.2 | 0.8 |
| Temperature of control stream | 312 | °C | 34.6 | 38.3 | 31.3 | 28.0 | 27.0 | 30.5 | 28.9 | 27.3 | 32.2 | 30.7 | 38.0 | 27.8 | 28.6 | 32.2 | 27.3 |
| T CLCW in | 313 | °C | 41.9 | 38.3 | 45.9 | 53.7 | 65.1 | 51.8 | 55.7 | 63.7 | 49.7 | 46.7 | 39.1 | 54.4 | 56.6 | 48.9 | 64.4 |
| T CLCW out | 314 | °C | 50.9 | 48.2 | 53.9 | 60.1 | 69.1 | 60.7 | 63.7 | 70.0 | 59.5 | 54.6 | 48.7 | 60.6 | 64.4 | 58.4 | 70.5 |
| T CWS | 315 | °C | 27 | 26.5 | 27 | 27 | 27 | 27 | 27 | 27 | 27 | 27 | 27 | 27 | 27 | 27 | 27 |
| T CWR | 316 | °C | 35.0 | 35.2 | 34.2 | 32.6 | 30.6 | 34.9 | 34.1 | 32.6 | 35.7 | 34.0 | 35.5 | 32.5 | 33.9 | 35.5 | 32.4 |
| CWS flow | 315 | m3/ h | 6.8 | 6.8 | 6.8 | 6.8 | 6.8 | 6.8 | 6.8 | 6.8 | 6.8 | 6.8 | 6.8 | 6.8 | 6.8 | 6.8 | 6.8 |

| Comparativ e examples | | | norm al | 40/60 | 50/50 | 60/40 | turn down | 45/55 | 50/50 | 60/40 | 40/60 | 50/50 | 40/60 | 60/40 | 50/50 | 40/60 | 60/40 |
|---|---|---|---|---|---|---|---|---|---|---|---|---|---|---|---|---|---|
| product | | | rando m | rando m | rando m | rando m | rando m | rando m | rando m | rando m | rando m | homo | homo | homo | homo | homo | homo |
| production in the GPR | | kg/h | 99 | 108 | 90 | 72 | 45 | 99 | 90 | 72 | 108 | 90 | 108 | 72 | 90 | 108 | 72 |
| Temperatur e GPR | | °C | 80 | 80 | 80 | 80 | 80 | 90 | 90 | 90 | 90 | 80 | 80 | 80 | 90 | 90 | 90 |
| T CRG in | 410 | °C | 82.77 | 82.77 | 82.77 | 82.77 | 84 | 92.56 | 92.56 | 92.56 | 92.56 | 82.77 | 82.77 | 82.77 | 92.56 | 92.56 | 92.56 |
| T CRG out | 411 | °C | 54.55 | 52.37 | 57.17 | 62.49 | 70.56 | 64.14 | 66.85 | 72.32 | 64.45 | 57.76 | 52.66 | 62.97 | 67.45 | 62.16 | 72.8 |
| by pass flow | 403 | m3/ h | 1.6 | 0.0 | 3.0 | 4.5 | 5.3 | 3.6 | 4.2 | 4.9 | 3.0 | 3.3 | 0.0 | 4.6 | 4.3 | 3.0 | 5.0 |
| Fresh cool water flow | 412 | m3/ h | 4.4 | 6.0 | 3.0 | 1.5 | 0.7 | 2.4 | 1.8 | 1.1 | 3.0 | 2.7 | 6.0 | 1.4 | 1.7 | 3.0 | 1.0 |
| T CWS | 412 | °C | 27 | 25 | 27 | 27 | 27 | 27 | 27 | 27 | 27 | 27 | 26.5 | 27 | 27 | 27 | 27 |
| T CW in | 413 | °C | 30.2 | 25.4 | 35.3 | 45.5 | 59.8 | 40.1 | 45.3 | 55.6 | 36.8 | 36.4 | 26.5 | 46.4 | 46.4 | 36.4 | 56.5 |
| T CW out | 414 | °C | 39.2 | 35.2 | 43.4 | 51.8 | 63.8 | 49.0 | 53.3 | 61.8 | 46.6 | 44.3 | 36.1 | 52.6 | 54.2 | 45.9 | 62.6 |

As can be seen from above Table 3 the temperature of the cooling water return (T CWR) stayed below 36°C for all inventive examples. Thus, a surprisingly broad operating window was found. For the comparative examples, the temperature of the cooling water out, abbreviated T CW out went up to values above 50°C and in some cases even above 60°C. Thus, many constraints are given for operation. It is needless to say temperature of above 50°C or even above 60°C cannot be accepted due to massive piping and heat exchanger restrictions.

## Claims

1. Plant for preparing propylene homopolymers or propylene copolymers, comprising
(i) feed tank(s) for catalyst (1), optional co-catalyst (2), optional activator and/or optional external donor (3);
(ii) optional pre-contacting unit (4) for catalyst mixing being connected by feed lines (5, 5', 5") with the feed tank(s);
(iii) a prepolymerization reactor (6) connected with the feed tank(s) (1, 2, 3) or the pre-contacting unit (4);
(iv) a propylene feed tank (7);
(v) a first loop reactor (8) connected with the prepolymerization reactor;
(vi) a second loop reactor (9) connected with the first loop reactor via a loop reactors connecting line (10);
(vii) means for feeding monomer and optional comonomer (11) and hydrogen (12) to one or more of first loop reactor (8), second loop reactor (9), and/or loop reactors connecting line (10) between the loop reactors;
(viii) a gas-phase reactor (13) equipped with a gas circulation line (14), a circulation gas compressor (15) and a circulation gas cooler (16), the gas-phase reactor being coupled to the at least second loop reactor by a direct feed line (17);
(ix) means for feeding monomer (44) and/or comonomer (18) and/or hydrogen (19) to the gas-phase reactor (13); whereby preferably the means for feeding monomer and/or comonomer are suitable for feeding monomer and/or comonomer in condensed form;
(x) optionally a product discharge vessel (20) connected with the gas-phase reactor;
(xi) optionally a product outlet heater (21)
(xii) a product receiver tank (22) connected with the optional product discharge vessel (20) or with the gas-phase reactor (13);
(xiii) at least one purge bin (23);
(xiv) at least one propylene nitrogen recovery unit (24);
(xv) a column supply line (241) for feeding a hydrocarbon stream to a column (28)
(xvi) a nitrogen re-feed line (243) for re-feeding a nitrogen rich stream to the purge bin (23)
(xvii) optionally a thermal oxidizer unit (43)
(xviii) an exhaust line (242) for discharge of an exhaust stream optionally to the optional thermal oxidizer (43)
(xix) means for propylene homopolymer or propylene copolymer recovery (25) optionally including means for homogenization, additivation, and pelletization;
(xx) a recovery gas treating unit (26) comprising at least one compressor (27), said column (28) and a reflux feed vessel (28a), the reflux feed vessel (28a) being connected via a recovery line (29) with the gas circulation line (14) of the gas-phase reactor (13);
(xxi) a cooling circuit (30) for the circulation gas cooler (16);
(xxii) a blow down unit (31) comprising a high pressure blow down bin (32), a low pressure blow down bin (33), the blow down unit (31) being optionally connected via connecting line (34) with the product receiver tank (22);
(xxiii) a recovery feed line (35) connecting recovery gas treating unit (26) with the propylene feed tank (7),
and
wherein the circulation gas cooler (16) is a heat exchanger within a closed loop cooling water system (300) comprising a cooling water pump (301), a secondary heat exchanger (302), expansion vessel (303) and a by-pass (304) over a secondary heat exchanger.

2. The plant of claim 1 further comprising one or more of the following:
(xxiv) knock out drum (38)
(xxv) gas phase reactor area depressurization cyclone (39)
(xxvi) gas phase reactor flare knock out drum (40).

3. A process for preparing propylene homopolymers or propylene copolymers. comprising
a) providing catalyst. optional co-catalyst. optional activator and/or optional external donor in feed tanks (1, 2, 3);
b) feeding said catalyst, said optional co-catalyst, said optional activator and/or said optional external donor to a pre-contacting unit (4) for providing a mixed catalyst system; feeding said mixed catalyst system to the prepolymerization reactor
or
feeding said catalyst, said optional co-catalyst, said optional activator and/or said optional external donor to prepolymerization reactor (6);
c) initiating prepolymerization by introducing propylene monomer and optionally introducing comonomer thereby providing a prepolymer;
d) feeding said prepolymer to a first loop reactor (8) and polymerizing propylene optionally with comonomer yielding a first intermediate;
e) feeding the first intermediate to a second loop reactor (9) via a loop reactors connection line (10) and further polymerizing propylene optionally with comonomer yielding a second intermediate, whereby propylene is fed from propylene feed tank (7) via propylene re-feed line (41) to the second loop reactor;
f) introducing comonomer and/or hydrogen at further feed points to the loop reactors;
g) feeding the second intermediate containing unreacted monomer(s) directly to gas phase reactor (13) via direct feed line (17);
h) further polymerizing propylene and optional comonomer in said gas phase reactor (13) by feeding propylene and/or comonomer and/or hydrogen and by effecting a gas circulation via a gas circulation line (14) in upwards direction, whereby the circulating gas is cooled in a circulation gas cooler (16);
i) optionally discharging the gas-phase reactor product into an optional product discharge vessel (20) and subsequently into a product-receiver tank (22) via connecting line (34) for providing a raw mixture or
discharging the gas-phase reactor product directly into a product receiver tank (22) for providing a raw mixture;
j) feeding said raw mixture to purge bin 23;
k) purging said raw mixture by nitrogen and catalyst deactivation agent, the catalyst deactivation agent being preferably steam,
l) separating nitrogen, deactivation agent and hydrocarbons from the purge bin (23) in a propylene nitrogen recovery unit (24) thereby
- providing an essentially pure nitrogen steam being fed via nitrogen re-feed line (243) to purge bin (23);
- providing hydrocarbon lean waste stream being fed via exhaust line (242) to a thermal oxidizer unit (43);
- providing a dry hydrocarbon rich stream being fed via column supply line (241) to column (28), whereby said column (28) is operated at a pressure higher than the pressure of the gas phase reactor (13) for removing oligomers, waxes and oils;
m) redirecting condensed propylene and propane to one or more of the following
- said propylene feed tank (7) via recovery feed line (35);
- an optional propane / propylene splitter,
and feeding the non-condensed matter at least in part to the gas-phase reactor via line 29, and
wherein the circulation gas cooler (16) is a heat exchanger and the heat is transferred via a closed loop cooling water system (300) comprising a cooling water pump (301), a secondary heat exchanger (302), expansion vessel (303) and a by-pass (304) over the secondary heat exchanger.

4. The process of claim 3, wherein the polymerization heat is transferred via the closed loop cooling water system to a common site cooling water system such as a cooling water tower for enabling a constant cooling water flow through the heat exchanger within the gas circulation at a temperature above the dew point of the circulation gas.

5. The process of any one of claims 3 or 4, allowing a turn down ratio of 50% as to production rate in the gas-phase reactor.

6. The process according to any one of claims 3 to 5, whereby the polymerization temperature in the first and/or the second loop reactor, preferably in both loop reactors is below 72°C, more preferably below 70°C.

7. The process according to any one of claims 3 to 6, producing a homopolymer with a split between 40% and 60% produced in the gas phase reactor.

8. The process according to any one of claims 3 to 7 producing a random ethylene propylene co-polymer with a split between 40% and 60% produced in the gas phase reactor.

9. The process according to any one of claims 3 to 8 whereby the polymerization temperature in the gas phase reactor is between 80°C and 90°C and the pressure between 19 and 25 barg, more preferable 20 and 24 barg.

10. The process according to any one of claims 3 to 9 whereby the operating pressure of the column is 26 barg, more preferable 25 barg most preferably 24 barg.

## Patentansprüche

1. Anlage zur Herstellung von Propylen-Homopolymeren oder Propylen-Copolymeren, umfassend
(i) Zuführungstank(s) für Katalysator (1), optionalen Co-Katalysator (2), optionalen Aktivator und/oder optionalen externen Donor (3);
(ii) eine optionale Vorkontakteinheit (4) zum Mischen des Katalysators, die über Zuführungsleitungen (5, 5', 5") mit dem (den) Zuführungstank(s) verbunden ist;
(iii) einen Vorpolymerisationsreaktor (6), der mit dem (den) Zuführungstank(s) (1, 2, 3) oder der Vorkontaktierungseinheit (4) verbunden ist;
(iv) einen Propylenvorratsbehälter (7);
(v) einen ersten Schleifenreaktor (8), der mit dem Vorpolymerisationsreaktor verbunden ist;
(vi) einen zweiten Schleifenreaktor (9), der mit dem ersten Schleifenreaktor über eine Schleifenreaktor-Verbindungsleitung (10) verbunden ist;
(vii) Mittel zum Zuführen von Monomer und optionalem Comonomer (11) und Wasserstoff (12) zu einem oder mehreren von: erstem Schleifenreaktor (8), zweitem Schleifenreaktor (9) und/oder Schleifenreaktor-Verbindungsleitung (10) zwischen den Schleifenreaktoren;
(viii) einen Gasphasenreaktor (13), der mit einer Gaszirkulationsleitung (14), einem Zirkulationsgaskompressor (15) und einem Zirkulationsgaskühler (16) ausgestattet ist, wobei der Gasphasenreaktor über eine direkte Zuführungsleitung (17) mit dem mindestens zweiten Schleifenreaktor verbunden ist;
(ix) Mittel zum Zuführen von Monomer (44) und/oder Comonomer (18) und/oder Wasserstoff (19) in den Gasphasenreaktor (13); wobei vorzugsweise die Mittel zum Zuführen von Monomer und/oder Comonomer geeignet sind, Monomer und/oder Comonomer in kondensierter Form zuzuführen;
(x) gegebenenfalls ein mit dem Gasphasenreaktor verbundenes Produktabzugsgefäß (20);
(xi) optional eine Produktauslassheizung (21)
(xii) einen Produktaufnahmetank (22), der mit dem optionalen Produktabzugsgefäß (20) oder mit dem Gasphasenreaktor (13) verbunden ist;
(xiii) mindestens einen Spülbehälter (23);
(xiv) mindestens eine Propylen-Stickstoff-Rückgewinnungseinheit (24);
(xv) eine Säulenversorgungsleitung (241) zur Zuführung eines Kohlenwasserstoffstroms zu einer Kolonne (28)
(xvi) eine Stickstoff-Wiedereinspeisungsleitung (243) zur Wiedereinspeisung eines stickstoffreichen Stroms in den Spülbehälter (23)
(xvii) optional eine thermische Oxidationseinheit (43)
(xviii) eine Abgasleitung (242) für die Ableitung eines Abgasstroms, der gegebenenfalls zur optionalen thermischen Oxidationseinheit (43) geleitet wird
(xix) Mittel zur Rückgewinnung von Propylen-Homopolymer oder Propylen-Copolymer (25)
gegebenenfalls mit Mitteln zur Homogenisierung, Additivierung und Pelletierung;
(xx) eine Einheit (26) zur Behandlung von Rückgewinnungsgas, die mindestens einen Kompressor (27), die Kolonne (28) und ein Rückflussspeisegefäß (28a) umfasst, wobei das Rückflussspeisegefäß (28a) über eine Rückgewinnungsleitung (29) mit der Gasumlaufleitung (14) des Gasphasenreaktors (13) verbunden ist;
(xxi) einen Kühlkreislauf (30) für den Gasumlaufkühler (16);
(xxii) eine Abblaseinheit (31), die einen Hochdruck-Abblasbehälter (32) und einen Niederdruck-Abblasbehälter (33) umfasst, wobei die Abblaseinheit (31) optional über eine Verbindungsleitung (34) mit dem Produktaufnahmebehälter (22) verbunden ist;
(xxiii) eine Rückgewinnungszufuhrleitung (35), die die Rückgewinnungsgasaufbereitungseinheit (26) mit dem Propylenvoratsbehälter (7) verbindet,
und
wobei der Zirkulationsgaskühler (16) ein Wärmetauscher innerhalb eines geschlossenen Kühlwassersystems (300) ist, das eine Kühlwasserpumpe (301), einen sekundären Wärmetauscher (302), ein Ausdehnungsgefäß (303) und einen Bypass (304) über einen sekundären Wärmetauscher umfasst.

2. Die Anlage nach Anspruch 1 umfasst außerdem eines oder mehrere der folgenden Merkmale:
(xxiv) K.o.-Trommel (38)
(xxv) Gasphasenreaktorbereich Druckentlastungszyklon (39)
(xxvi) Gasphasenreaktor Fackel Knock-out-Trommel (40).

3. Verfahren zur Herstellung von Propylenhomopolymeren oder Propylencopolymeren, umfassend
a) Bereitstellung von Katalysator, fakultativem Co-Katalysator, fakultativem Aktivator und/oder fakultativem externen Donor in den Zufuhrungstanks (1, 2, 3);
b) Zuführen des Katalysators, des optionalen Co-Katalysators, des optionalen Aktivators und/oder des optionalen externen Donors zu einer Vorkontakteinheit (4), um ein gemischtes Katalysatorsystem bereitzustellen; Zuführen des gemischten Katalysatorsystems zum Vorpolymerisationsreaktor
oder
Zuführen des Katalysators, des optionalen Co-Katalysators, des optionalen Aktivators und/oder des optionalen externen Donors zum Vorpolymerisationsreaktor (6);
c) Einleiten der Vorpolymerisation durch Einführen von Propylenmonomer und gegebenenfalls von Comonomer, wodurch ein Vorpolymer entsteht;
d) Einspeisung des Vorpolymers in einen ersten Schleifenreaktor (8) und Polymerisation von Propylen, gegebenenfalls mit einem Comonomer, wobei ein erstes Zwischenprodukt entsteht;
e) Zuführen des ersten Zwischenprodukts zu einem zweiten Schleifenreaktor (9) über eine Schleifenreaktor-Verbindungsleitung (10) und weiteres Polymerisieren von Propylen, gegebenenfalls mit einem Comonomer, wodurch ein zweites Zwischenprodukt entsteht, wobei Propylen aus einem Propylenvorratsbehälter (7) über eine Propylen-Wiederzufuhrleitung (41) zu dem zweiten Schleifenreaktor zugeführt wird;
f) Einführung von Comonomer und/oder Wasserstoff an weiteren Einspeisepunkten in die Kreislaufreaktoren;
g) Einspeisung des zweiten Zwischenprodukts, das nicht umgesetzte(s) Monomer(e) enthält, direkt in den Gasphasenreaktor (13) über eine direkte Zufuhrleitung (17);
h) weiteres Polymerisieren von Propylen und optionalem Comonomer in dem Gasphasenreaktor (13) durch Zuführen von Propylen und/oder Comonomer und/oder Wasserstoff und durch Bewirken einer Gaszirkulation über eine Gaszirkulationsleitung (14) in Aufwärtsrichtung, wobei das zirkulierende Gas in einem Zirkulationsgaskühler (16) gekühlt wird;
i) gegebenenfalls Ableitung des Reaktorprodukts in der Gasphase in einen optionalen Produktabzugsgefäß (20) und anschließend über eine Verbindungsleitung (34) in einen Produktaufnahmetank (22) zur Bereitstellung eines Rohgemisches oder
Ableitung des Gasphasenreaktorprodukts direkt in einen Produktempfangsbehälter (22) zur Bereitstellung einer Rohmischung;
j) Einspeisung der Rohmischung in den Spülbehälter (23);
k) Spülen der Rohmischung mit Stickstoff und Katalysatordeaktivierungsmittel, wobei das Katalysatordeaktivierungsmittel vorzugsweise Dampf ist,
l) Abtrennung von Stickstoff, Deaktivierungsmittel und Kohlenwasserstoffen aus dem Spülbehälter (23) in einer Propylen-Stickstoff-Rückgewinnungseinheit (24), wodurch
- Bereitstellung eines im Wesentlichen reinen Stickstoffdampfes, der über die Stickstoff-Wiedereinspeisungsleitung (243) dem Spülbehälter (23) zugeführt wird;
- Bereitstellung eines mageren Kohlenwasserstoff-Abfallstroms, der über eine Abgasleitung (242) zu einer thermischen Oxidationseinheit (43) geleitet wird;
- Bereitstellen eines trockenen kohlenwasserstoffreichen Stroms, der über die Säulenversorgungsleitung (241) der Kolonne (28) zugeführt wird, wobei die Kolonne (28) bei einem Druck betrieben wird, der höher ist als der Druck des Gasphasenreaktors (13), um Oligomere, Wachse und Öle zu entfernen;
m) Umleitung von kondensiertem Propylen und Propan auf eines oder mehrere der folgenden Verfahren
- den Propylenvorratsbehälter (7) über die Rückgewinnungsleitung (35);
- einen optionalen Propan/Propylen-Splitter,
und Einspeisung des nicht kondensierten Stoffes zumindest teilweise in den Gasphasenreaktor über die Leitung 29, und
wobei der Umlaufgaskühler (16) ein Wärmetauscher ist und die Wärme über ein Kühlwassersystem (300) mit geschlossenem Kreislauf übertragen wird, das eine Kühlwasserpumpe (301), einen sekundären Wärmetauscher (302), ein Ausdehnungsgefäß (303) und einen Bypass (304) über den sekundären Wärmetauscher umfasst.

4. Verfahren nach Anspruch 3, bei dem die Polymerisationswärme über das Kühlwassersystem mit geschlossenem Kreislauf an ein gemeinsames Kühlwassersystem, wie z. B. einen Kühlwasserturm, übertragen wird, um einen konstanten Kühlwasserstrom durch den Wärmetauscher innerhalb des Gaskreislaufs bei einer Temperatur oberhalb des Taupunkts des Kreislaufgases zu ermöglichen.

5. Verfahren nach einem der Ansprüche 3 oder 4, bei dem die Produktionsrate im Gasphasenreaktor um 50 % reduziert werden kann.

6. Verfahren nach einem der Ansprüche 3 bis 5, wobei die Polymerisationstemperatur im ersten und/oder zweiten Schleifenreaktor, vorzugsweise in beiden Schleifenreaktoren, unter 72°C, vorzugsweise unter 70°C liegt.

7. Verfahren nach einem der Ansprüche 3 bis 6, wobei ein Homopolymer mit einem Anteil zwischen 40 % und 60 % im Gasphasenreaktor hergestellt wird.

8. Verfahren nach einem der Ansprüche 3 bis 7 zur Herstellung eines statistischen Ethylen-Propylen-Copolymers mit einem Anteil zwischen 40 % und 60 %, das im Gasphasenreaktor hergestellt wird.

9. Verfahren nach einem der Ansprüche 3 bis 8, wobei die Polymerisationstemperatur im Gasphasenreaktor zwischen 80°C und 90°C und der Druck zwischen 19 und 25 bar, vorzugsweise 20 und 24 bar, liegt.

10. Verfahren nach einem der Ansprüche 3 bis 9, wobei der Betriebsdruck der Kolonne 26 bar, vorzugsweise 25 bar und besonders bevorzugt 24 bar beträgt.

## Revendications

1. Installation de préparation d'homopolymères de propylène ou de copolymères de propylène, comprenant
(i) un ou plusieurs réservoir(s) d'alimentation pour un catalyseur (1), un cocatalyseur (2) optionnel, un activateur optionnel et/ou un donneur externe (3) optionnel ;
(ii) une unité de précontact (4) optionnelle pour un mélange de catalyseur, raccordée par des conduites d'alimentation (5, 5', , 5") au (x) réservoir(s) d'alimentation ;
(iii) un réacteur de prépolymérisation (6) raccordé au(x) réservoir(s) d'alimentation (1, 2, 3) ou à l'unité de précontact (4) ;
(iv) un réservoir d'alimentation en propylène (7) ;
(v) un premier réacteur à boucle (8) raccordé au réacteur de prépolymérisation ;
(vi) un second réacteur à boucle (9) raccordé au premier réacteur à boucle par l'intermédiaire d'une conduite de raccordement (10) de réacteurs à boucle ;
(vii) des moyens d'alimentation en monomère et en comonomère (11) et en hydrogène (12) optionnels d'un ou plusieurs parmi le premier réacteur à boucle (8), le second réacteur à boucle (9) et/ou une conduite de raccordement (10) de réacteurs à boucle entre les réacteurs à boucle ;
(viii) un réacteur à phase gazeuse (13) équipé d'une conduite de circulation de gaz (14), d'un compresseur de gaz de circulation (15) et d'un refroidisseur de gaz de circulation (16), le réacteur à phase gazeuse étant couplé à l'au moins second réacteur à boucle par une conduite d'alimentation directe (17) ;
(ix) des moyens d'alimentation en monomère (44) et/ou en comonomère (18) et/ou en hydrogène (19) du réacteur à phase gazeuse (13) ; moyennant quoi, de préférence, les moyens d'alimentation en monomère et/ou en comonomère sont appropriés pour fournir un monomère et/ou un comonomère sous forme condensée ;
(x) optionnellement un récipient d'évacuation de produit (20) raccordé au réacteur à phase gazeuse ;
(xi) optionnellement un dispositif de chauffage de sortie de produit (21)
(xii) un réservoir récepteur de produit (22) raccordé au récipient d'évacuation de produit (20) optionnel ou au réacteur à phase gazeuse (13) ;
(xiii) au moins un bac de purge (23) ;
(xiv) au moins une unité de récupération d'azote-propylène (24) ;
(xv) une conduite d'alimentation de colonne (241) pour fournir un courant d'hydrocarbure à une colonne (28)
(xvi) une conduite de réalimentation en azote (243) pour réalimenter le bac de purge (23) avec un courant riche en azote
(xvii) optionnellement une unité d'oxydation thermique (43)
(xviii) une conduite d'échappement (242) pour évacuer un courant d'échappement optionnellement vers le système d'oxydation thermique (43) optionnel
(xix) des moyens de récupération d'homopolymère de propylène ou de copolymère de propylène (25) comprenant optionnellement des moyens d'homogénéisation, d'additivation et de granulation ;
(xx) une unité de traitement de gaz de récupération (26) comprenant au moins un compresseur (27), ladite colonne (28) et un récipient d'alimentation en reflux (28a), le récipient d'alimentation en reflux (28a) étant raccordé par l'intermédiaire d'une conduite de récupération (29) à la conduite de circulation de gaz (14) du réacteur à phase gazeuse (13) ;
(xxi) un circuit de refroidissement (30) pour le refroidisseur de gaz de circulation (16) ;
(xxii) une unité de vidange (31) comprenant un bac de vidange haute pression (32), un bac de vidange basse pression (33), l'unité de vidange (31) étant optionnellement raccordée par l'intermédiaire d'une conduite de raccordement (34) au réservoir récepteur de produit (22) ;
(xxiii) une conduite d'alimentation de récupération (35) raccordant l'unité de traitement de gaz de récupération (26) au réservoir d'alimentation en propylène (7),
et
dans laquelle le refroidisseur de gaz de circulation (16) est un échangeur de chaleur à l'intérieur d'un système à eau de refroidissement en boucle fermée (300) comprenant une pompe à eau de refroidissement (301), un échangeur de chaleur secondaire (302), un vase d'expansion (303) et une dérivation (304) par-dessus un échangeur de chaleur secondaire.

2. Installation selon la revendication 1, comprenant en outre un ou plusieurs des éléments suivants :
(xxiv) un tambour séparateur (38)
(xxv) un cyclone de dépressurisation de zone de réacteur à phase gazeuse (39)
(xxvi) un tambour séparateur de torchère de réacteur à phase gazeuse (40).

3. Procédé de préparation d'homopolymères de propylène ou de copolymères de propylène
comprenant
a) la fourniture d'un catalyseur, d'un cocatalyseur optionnel, d'un activateur optionnel et/ou d'un donneur externe optionnel dans des réservoirs d'alimentation (1, 2, 3) ;
b) l'introduction dudit catalyseur, dudit cocatalyseur optionnel, dudit activateur optionnel et/ou dudit donneur externe optionnel dans une unité de précontact (4) pour fournir un système de catalyseur mélangé ; l'introduction dudit système de catalyseur mélangé dans le réacteur de prépolymérisation
ou
l'introduction dudit catalyseur, dudit cocatalyseur optionnel, dudit activateur optionnel et/ou dudit donneur externe optionnel dans le réacteur de prépolymérisation (6) ;
c) l'initiation d'une prépolymérisation en introduisant un monomère de propylène et optionnellement en introduisant un comonomère pour ainsi fournir un prépolymère ;
d) l'introduction dudit prépolymère dans un premier réacteur à boucle (8) et la polymérisation du propylène optionnellement avec un comonomère résultant en un premier intermédiaire ;
e) l'introduction du premier intermédiaire dans un second réacteur à boucle (9) par l'intermédiaire d'une conduite de raccordement (10) de réacteurs à boucle et la polymérisation supplémentaire de propylène optionnellement avec un comonomère résultant en un second intermédiaire, moyennant quoi le propylène est fourni à partir d'un réservoir d'alimentation en propylène (7) par l'intermédiaire d'une conduite de réalimentation en propylène (41) au second réacteur à boucle ;
f) l'introduction d'un comonomère et/ou d'hydrogène à d'autres points d'alimentation dans les réacteurs à boucle ;
g) l'introduction du second intermédiaire contenant le(s) monomère(s) n'ayant pas réagi directement dans le réacteur à phase gazeuse (13) par l'intermédiaire d'une conduite d'alimentation directe (17) ;
h) la polymérisation supplémentaire de propylène et d'un comonomère optionnel dans ledit réacteur à phase gazeuse (13) en introduisant du propylène et/ou un comonomère et/ou de l'hydrogène et en effectuant une circulation de gaz par l'intermédiaire d'une conduite de circulation de gaz (14) dans le sens ascendant, moyennant quoi le gaz en circulation est refroidi dans un refroidisseur de gaz de circulation (16) ;
i) l'évacuation optionnelle du produit de réacteur à phase gazeuse dans un récipient d'évacuation de produit (20) optionnel et ensuite dans un réservoir récepteur de produit (22) par l'intermédiaire d'une conduite de raccordement (34) pour fournir un mélange brut ou l'évacuation du produit de réacteur à phase gazeuse directement dans un réservoir récepteur de produit (22) pour fournir un mélange brut ;
j) l'introduction dudit mélange brut dans le bac de purge (23) ;
k) le purge dudit mélange brut avec de l'azote et un agent de désactivation de catalyseur, l'agent de désactivation de catalyseur étant de préférence de la vapeur d'eau,
l) la séparation de l'azote, de l'agent de désactivation et des hydrocarbures provenant du bac de purge (23) dans une unité de récupération d'azote-propylène (24), ce qui
- fournit une vapeur d'azote essentiellement pur introduit par l'intermédiaire d'une conduite de réalimentation en azote (243) dans le bac de purge (23) ;
- fournit un courant de déchet pauvre en hydrocarbures introduit par l'intermédiaire d'une conduite d'échappement (242) dans une unité d'oxydation thermique (43) ;
- fournit un courant sec riche en hydrocarbures introduit par l'intermédiaire d'une conduite d'alimentation de colonne (241) dans la colonne (28), moyennant quoi ladite colonne (28) fonctionne à une pression supérieure à la pression du réacteur à phase gazeuse (13) pour éliminer les oligomères, les cires et les huiles ;
m) la redirection du propylène et du propane condensés vers un ou plusieurs des éléments suivants
- ledit réservoir d'alimentation en propylène (7) par l'intermédiaire d'une conduite d'alimentation de récupération (35) ;
- un séparateur de propane/propylène optionnel,
et l'introduction de la matière non condensée au moins en partie dans le réacteur à phase gazeuse par l'intermédiaire d'une conduite 29, et
dans lequel le refroidisseur de gaz de circulation (16) est un échangeur de chaleur et la chaleur est transférée par l'intermédiaire d'un système à eau de refroidissement en boucle fermée (300) comprenant une pompe à eau de refroidissement (301), un échangeur de chaleur secondaire (302), un vase d'expansion (303) et une dérivation (304) par-dessus l'échangeur de chaleur secondaire.

4. Procédé selon la revendication 3, dans lequel la chaleur de polymérisation est transférée par l'intermédiaire du système à eau de refroidissement en boucle fermée vers un système à eau de refroidissement de site commun tel qu'une tour à eau de refroidissement pour permettre un débit constant d'eau de refroidissement à travers l'échangeur de chaleur dans la circulation de gaz à une température supérieure au point de rosée du gaz de circulation.

5. Procédé selon l'une des revendications 3 ou 4, permettant un taux de réduction de 50 % du taux de production dans le réacteur à phase gazeuse.

6. Procédé selon l'une des revendications 3 à 5, moyennant quoi la température de polymérisation dans le premier et/ou le second réacteur à boucle, de préférence dans les deux réacteurs à boucle, est inférieure à 72 °C, de manière davantage préférée inférieure à 70 °C.

7. Procédé selon l'une des revendications 3 à 6, produisant un homopolymère avec une fraction entre 40 % et 60 % produite dans le réacteur à phase gazeuse.

8. Procédé selon l'une des revendications 3 à 7, produisant un copolymère statistique d'éthylène-propylène avec une fraction entre 40 % et 60 % produite dans le réacteur à phase gazeuse.

9. Procédé selon l'une des revendications 3 à 8, moyennant quoi la température de polymérisation dans le réacteur à phase gazeuse est entre 80 °C et 90 °C et la pression entre 19 et 25 barg, de manière davantage préférée entre 20 et 24 barg.

10. Procédé selon l'une des revendications 3 à 9, moyennant quoi la pression de fonctionnement de la colonne est de 26 barg, de manière davantage préférée de 25 barg, de manière préférée entre toutes de 24 barg.
